# EUROPEAN PATENT APPLICATION

(11) **EP 2 811 478 A1**
(43) Date of publication of application: **10.12.2014**
(21) Application number: 13171080.8
(22) Date of filing: 07.06.2013
(51) Int. Cl.: G09B 23/28

(54) **User interface for camera simulating device**

(71) Applicant: Surgical Science Sweden AB, 413 14 Göteborg (SE)
(72) Inventor: Larsson, Anders, 431 59 Mölndal (SE); Johansson, Christer, 424 71 Olofstorp (SE); Mattias, Nyström, 412 65 Göteborg (SE)
(74) Representative: Edlund, Fabian

(57) **Abstract**

A camera simulating user interface (1) comprising a rigid shaft (21) and a handle (20), being rigidly attached to the rigid shaft (21). The handle (22) has a rotator sleeve (23) rotatable around a longitudinal axis (C) relative the rigid shaft (21), and a sensor body (22) rotatable relative the rigid shaft (21) and the rotator sleeve (23). The sensor body (22) has a first rotation sensor (40) mounted in the sensor body (22) and adapted to detect rotation of the rotator sleeve (23) in relation to the sensor body (22), a second rotation sensor (46) mounted in the sensor body (22) adapted to detect rotation of the sensor body (22) in relation to the rigid shaft (21), and a signal interface (52) connected to receive a first and a second detection signal from the first and second rotation sensors. This configuration leads to efficient design, usability and manufacturability.

## Description

### Field of the invention

The present invention relates to a user interface for a surgical simulation system, and in particular a user interface device for simulating a camera.

### Background of the invention

In recent years, systems for surgical simulations have become increasingly more used, in order to train physicians various surgical procedures without putting live patients at risk. In particular in the field of minimally-invasive surgery, such as laparoscopy, endoscopy, colonoscopy, etc., such simulation systems have gained significant acceptance. During minimal-invasive surgery the physician typically relies on an image on a screen rather than on an actual view of the patient, and with powerful image rendering available today, such an image can be simulated with a very high degree of realism.

During actual surgery this image is provided by a camera. The optics of such a camera is commonly mounted on the chamfered end of a shaft to enable a field of view that can cover areas that are obstructed from a direct line of sight from the entry point. Alternatively the whole camera can be mounted on the chamfered end of the shaft. The shaft may be rotated to give a more preferred field of view. However, as the shaft rotates the view consequently rotates relative the surgical instruments, or rather relative the surgeon, which may unnecessarily make the surgery more difficult. One solution to this problem is to provide an image sensor which is rotatable in the camera, for example in a handle on the opposite side of the shaft from the optics, which handle is rotatable relative the shaft and the optics. Rotating the image sensor may provide an image which better corresponds to the coordinate system of any additional surgical instruments used and of the physician.

During surgical simulation, in order to interact with the simulation software, the simulation system further requires input devices, i.e. hardware which the physician may operate and which simulates an actual surgical instrument. Such input devices should in physical appearance and function resemble an actual instrument. It has become clear that there is also a need for an input device which realistically simulates the camera as well.

In the case of for example the Camera Instrument, developed by G-Coder Systems AB, this device includes a rigid shaft, corresponding to for example a laparoscope comprising a rod lens system to be inserted into a patient, and a handle, with which the physician can move the camera. In order to simulate the degrees of freedom of an actual laparoscope, which passes into a patient body through a small opening, the shaft is supported by a ball joint frame in a pivoting point with two degrees of freedom (rotation α, β). In addition, the shaft can be translated in linear motion along its longitudinal axis, i.e. in and out of a simulated body, as well as rotated around this longitudinal axis. The handle further includes a rotational portion, allowing the physician to rotate a simulated image sensor, and several buttons and wheels for controlling the simulation software's zoom, focus, lock, etc. The Camera Instrument and frame contains sensors for all degrees of freedom including rotation of the shaft and rotational portion. Most sensors are provided in vicinity of the ball joint pivoting point, except the sensor for the rotational portion, which is detected in the handle and provided through a first signal interface on the handle. The additional sensors for the buttons and wheels are also detected and provided through a second signal interface in the handle. These signal interfaces are thus movable in relation to the frame, and the first signal interface is connected to the frame with a cord.

Alternatively, there are instruments where the shaft may have a rotationally fixed exterior tube which does not rotate. Instead, the handle rotates in relation to the tube, and this motion is transferred by an axle extending inside the tube to the distal end of the shaft, where it is detected by a rotation encoder. Detection of the simulated image sensor's rotation may be done similar to the example above, by a sensor provided on the handle. This example therefore requires two signal interfaces on the moving parts of the device, one in the distal end of the shaft, and one on the grip portion. Each of these interfaces needs to be connected to the frame with a cord.

Despite the many user interfaces that are already available, these solutions are mechanically and electrically complex in both the handle and the frame, typically with electric circuitry distributed between several locations. Also, they tend to obstruct the user due to multiple cables connected to the device, and in some cases cables connected to several parts of the handle.

### General disclosure of the invention

It is an object of the present invention to address the shortcomings of the prior art, and to provide an improved user interface device which is robust in function and cost effective to manufacture. Another object is to provide a user interface device which in use is less obstructive for the user.

According to the invention, these and other objects are achieved with a device comprising a rigid shaft having a primary extension along a longitudinal axis, the rigid shaft being pivotably supported by a frame, and movable in relation to the frame in the axial direction, but being fixed in relation to the frame with respect to rotation around the longitudinal axis, and a handle, being rigidly attached to the rigid shaft, having a rotator sleeve rotatable around the longitudinal axis relative the rigid shaft, and a sensor body rotatable around the longitudinal axis relative the rigid shaft and the rotator sleeve. The sensor body includes a first rotation sensor mounted in the sensor body and adapted to detect rotation of the rotator sleeve in relation to the sensor body, a second rotation sensor mounted in the sensor body adapted to detect rotation of the sensor body in relation to the rigid shaft, and a signal interface mounted on the sensor body and connected to receive a first detection signal from the first rotation sensor and to receive a second detection signal from the second rotation sensor.

Important features of this design are 1) a shaft which is fixed with respect to rotation around its longitudinal axis, 2) a handle which is fixedly attached to the shaft and which has a sensor body and a rotator sleeve which are rotatable relative to the shaft and to each other, and 3) a single signal interface mounted on the sensor body which receives detection signals correlating to each rotational movement respectively. The combination of these features has not been previously disclosed, and provides several advantages compared to prior art user interface devices.

To begin with, all sensor elements and electronic circuitry can be provided in or adjacent to the sensor body, leading to an efficient design and manufacturing. The suspension of the shaft in the frame may be of simpler construction since it does not need to allow for or detect rotational movement of the shaft. Further, the single signal interface, which also is provided on the sensor body, is less likely to obstruct the user compared to user interfaces with multiple cables or wires.

According to this design, both sensors are thus arranged in the sensor body. The invention is based on the realization that it is not necessary to arrange a sensor in the sleeve in order to detect rotation between the sleeve and the rigid shaft. Instead, relative rotation between the sleeve and the shaft can be deduced from two sensor signals representing relative rotation between the sensor body and the sleeve, and between the sleeve and the shaft, respectively.

Combination of the two sensor signals to provide a signal representative of relative rotation between the sleeve and the shaft may be provided by processing circuitry in the handle. Alternaitvely, the signal interface may output the two sensor signals unaltered, so that the combination can be provided by the simulaiton system.

According to a preferred embodiment, the handle further comprises a first touch sensitive user interface mounted on the sensor body, and the signal interface further being connected to the touch sensitive user interface to receive an input signal.

According to this embodiment, further user input signals can be detected in the sensor body, so that additional features of the simulation system can be controlled by the user without the need for any additional signal interfaces.

Further, as only one single signal interface is required (from the sensor body), at most one cable or wire is required. In particular, the rotator sleeve may be completely free from cables or wiring.

In preferred embodiments, the user interface device is arranged with a digital data signal interface, comprised in the signal interface, being connected to the surgical simulation system to transmit a digital data signal. For this purpose, the signal interface may further comprises a processing circuitry being adapted to convert at least one of the first detection signal, the second detection signal and the input signal into a digital data signal. It may also possible to provide a combination of digital and analog signals.

In these preferred embodiments the first and second rotational sensors as well as the user interface can provide any form of analog or digital detection signals which may all be converted to one digital data signal. This enables the possibility to select multiple different sensors based on factors such as cost, availability, size, shape, resolution, etc. rather than output signal. Additionally a digital data signal carrying all sensor and input data is less affected by noise and interference, compared to multiple cables or wires transmitting for example analog sensor signals.

The digital data signal interface may be a USB interface. Advantages provided by a USB interface include enabling a design of the surgical simulation system with commercial off the shelf components rather than proprietary interfaces, consequently reducing cost. Furthermore the single signal interface requires fewer interfaces on the surgical simulation system, also lowering the cost.

The digital data signal interface may be a wireless data interface. A wireless data interface is advantageously less in the way of the physician and may also better mimic surgical instruments which do not have any wires.

The first rotation sensor may comprise a first static member, which may typically be mounted in the sensor body, and a first rotating member, being rotationally fixed to the rotator sleeve, whereby rotation of the rotator sleeve with respect to the sensor body will generate a sensor signal indicative of the rotation. Additionally the second rotation sensor may comprise a second static member, which may also typically be mounted in the sensor body. The second rotation sensor may further comprise a second rotating member and a torque transfer member being rotationally fixed to the second rotating member and to the rigid shaft, whereby rotation of the sensor body with respect to the rigid shaft will generate a sensor signal indicative of the rotation.

The first rotation sensor and the second rotation sensor may be arranged coaxially along the longitudinal axis, with the first sensor arranged closer to the rotator sleeve, so that the torque transfer member extends along the longitudinal axis through the first rotation sensor.

In this manner the rotation sensors may for example be mounted in the sensor body in proximity to the signal interface and provide detection signals corresponding to the rotation of the sensor body and to the rotation of the rotator sleeve in relation to the rigid shaft respectively. In particular this may be achieved without providing electrical connections which have to withstand the rotational movements, as these electrical connections may lead from the static parts respectively to the signal interface.

### Brief description of the drawings

The present invention will be described in more detail with reference to the appended drawings, showing currently preferred embodiments of the invention.
Figure 1 is a schematic view of a surgical simulation system with a camera interface device according to an embodiment of the invention.
Figure 2 is a schematic and partly exploded view of the camera interface device in figure 1.
Figure 3 is a schematic view of the suspension portion in figure 2.
Figure 4 is a cross-sectional view of the handle in figure 2.

### Detailed description of preferred embodiments

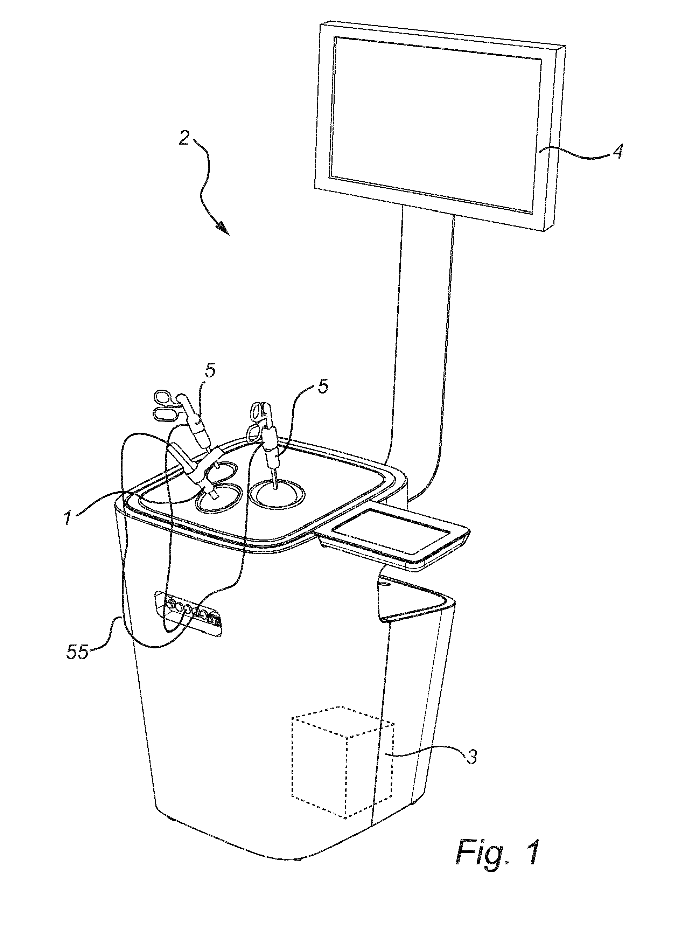

Figure 1 shows a simulation system 2 implementing a user interface device 1 according to an embodiment of the present invention. A user interface device according to the present invention may be implemented in many other types of simulation systems, including non-surgical simulation systems. In the illustrated case, the simulation system 2 is a surgical simulation system and comprises a processing unit 3 running simulation software for simulating a surgical procedure, and a display 4 for displaying a visualization of the simulated procedure to a user. The system further has three user interface devices 1, 5 connected to the processing unit 3. Two of these, 5, are adapted to simulate surgical instruments operated by a physician inside a human body. The third interface device 1 is adapted to simulate a camera provided inside the human body, and arranged to acquire visual output from the surgical procedure, In use, the three interfaces are used by a user, typically a physician training for a particular surgical procedure, to interact with the simulation running in the processing unit 3 and visualized on the display device 4. In particular, the visual output displayed on the display 4 will depend on the position and orientation of the camera interface device 1.

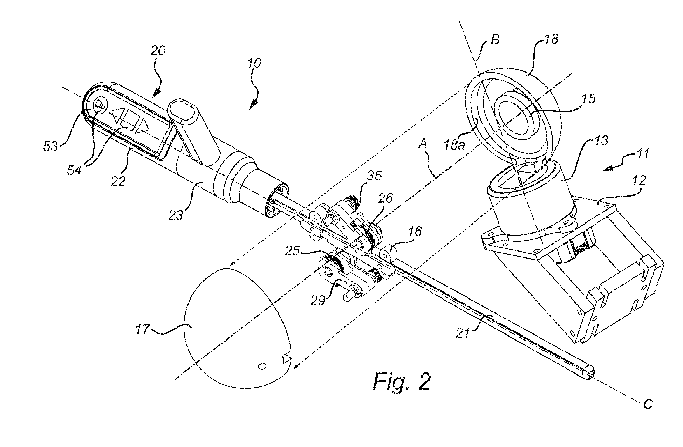

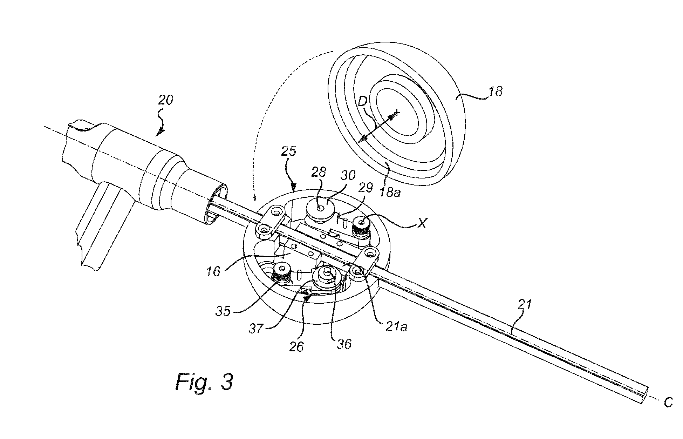

Figure 2 and 3 very schematically show some parts of the camera interface device 1 in figure 1, in order to illustrate the various degrees of freedom of the interface. The camera instrument 10 essentially comprises a handle 20 attached to the end of a rigid shaft 21, which is pivotably suspended by a frame 11. The frame 11 allows rotation of the shaft around a first axis A and a second axis B, typically orthogonal to the first axis A.

In the illustrated embodiments, rotation around the second axis B is provided by a support 15 rotationally mounted to a stationary base 12 of the frame 11 by a suitable bearing 13. A rotation sensor (not shown) is provided to detect the position of the support 15 in relation to the base 12. The sensor may for example be a rotational encoder integrated in the base 12, and arranged to detect rotation.

The shaft 21 of the instrument 10 is slidably suspended by a suspension portion 16, which is rotatably mounted on the rotatable support 15 so as to be rotatable around axis A. The suspension portion 16 is arranged in a semi-spherical cover 17, adapted to fit snugly with a similar cover 18 fixed to the support 15.

Primarily with reference to figure 3, a sensor arrangement is provided in the housing 17. The sensor arrangement here comprises a first sensor 25 to detect rotation of the suspension portion 16 in relation to the support 15 around axis A, and a second sensor 26 to detect translation of the shaft 21 in relation to the suspension portion 16.

The first sensor 25 is here a rotation sensor, such as an optic or magnetic sensor. The sensor has an encoder (not visible in figure 3), and an encoding member, such as a disc, coupled to a pin 28 rotatable with respect to the encoder. Relative rotation of the pin 28 can be detected by the encoder, and results in a sensor signal indicative of the rotation. The encoder is arranged on a lever 29 which is pivotally attached to a mounting point X and is spring loaded against a guiding surface 18a, which is fixed in relation to the support 15. The guiding surface 18a is here formed by an inner surface 18a of the cover 18. A roller 30 is fixed to the pin 28, and is brought into frictional contact with the guiding surface 18a. If preferred, the guiding surface 18a and the roller may have structured engaging surfaces, to increase friction.

Upon rotation of the suspension portion 16 with respect to the support 15, the roller 30 will rotate along the surface 18a, and rotation of the pin 28 is detected by the encoder. The sensor 25 thus generates a first sensor signal indicative of rotation of the suspension portion 16 with respect to the support 15. As the inner surface 18a is separated from the axis by a distance D, the encoder will rotate several turns during one revolution of the suspension portion, and resolution of the detection is increased.

The sensor 25 may be in electric contact with suitable circuitry (not shown), from which the first sensor signal can be outputted to the processing unit 3.

The second sensor 26 may be a rotation sensor similar to the first sensor 25, with an encoder (not visible) mounted on a similar spring loaded lever 35. The pin 36 of the second encoder 26 is fixed to a roller 37, which is brought in frictional contact with a surface 21 a of the shaft 21.

Upon translation of the shaft 21 with respect to the suspension portion 16, the roller 37 will rotate, and cause the second sensor 26 to generate a second sensor signal indicative of the translation. Also the second sensor 26 may be in electric contact with suitable circuitry (not shown).

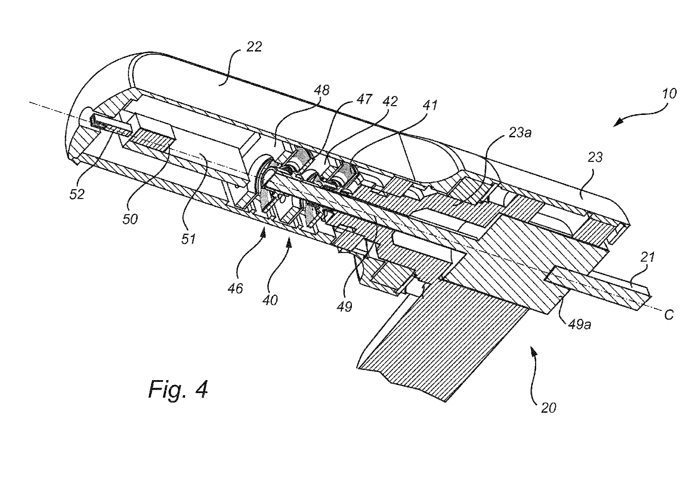

Turning now to figure 4, the handle 20 has a sensor body 22 and a rotator sleeve 23 which are both rotatably connected to the shaft 21 around the longitudinal axis C. The rotator sleeve has a grip portion and is intended to be used by a user to rotate the instrument 10. As the shaft 21 is fixed with respect to the frame, rotation of the instrument 10 here means rotation of the rotator sleeve with respect to the shaft. The sleeve 23 and the sensor body 22 are preferably coupled by a certain friction, such that the sensor body will rotate with the rotator sleeve unless subject to external force.

Reference numeral 40 denotes a first rotation sensor, such as an optic or magnetic sensor, which is mounted in the sensor body 22. The first sensor 40 has an encoding member 41, here a disc, and an encoder 42. Relative rotation of the encoder 42 in relation to the disc 41 can be detected, and results in a sensor signal indicative of the rotation. The first sensor 40 is here in electric contact with circuitry 50 on a printed circuit board 51, from which the sensor signal can be outputted via a signal interface 52.

The encoder 42 is fixedly attached to the sensor body 22. The disc 41 is rotationally fixed to the rotator sleeve 23, here by means of a part 23a of the sleeve 23 extending partly into the sensor body 22. Rotation of the sleeve 23 in relation to the sensor body 22 will thus rotate the disc 41 in relation to the encoder 42, and generate a first detection signal available at the signal interface 52.

In addition to the first rotation sensor 40, the arrangement here comprises a second rotation sensor 46, arranged outside the first sensor 40 with respect to the sleeve 23. The second sensor 46 also has a code disc 47 and a encoder 48. The encoder 48 is fixedly arranged in the sensor body 22. The disc 47 is rotationally connected to a torque transfer member 49, arranged coaxially inside the part 23a along the longitudinal axis C of the handle. The member 49 thus extends past the first encoder 40 out of the sensor body 22 and further through the rotator sleeve 23. At its distal end 49a the member 49 is rotationally connected to the rigid shaft 21. The expressions that two parts are "rotationally connected" or "rotationally fixed" are here intended to indicate that when one part is rotated, the other part will also rotate. Therefore, when the sensor body 22 is rotated relative the rigid shaft 21, the disc 47 will rotate with respect to the encoder 48, and the sensor 46 will generate a second detection signal. The second sensor 46 is also in electric contact with the circuitry 50 on the printed circuit board 51, from which the second detection signal can be outputted via the signal interface 52.

Details of the operation of the various parts of the handle, and in particular the sensor body, will now be discussed with reference to figure 4.

Just as in an actual camera, rotation of the instrument 10 should rotate the field of view displayed on the display 4. As the shaft 21 of the interface is fixed with respect to rotation, rotation of the instrument will correspond to rotation of the sleeve 23 (which has the grip portion) with respect to the shaft 21. Relative rotation between the sleeve 23 and the shaft 21 may be retrieved by combining information from the first detection signal from the first sensor 40 (corresponding to relative rotation between the sleeve 23 and the shaft 21) and the second detection signal from the second rotation sensor 46 (corresponding to relative rotation between the sensor body 22 and the shaft 21). As mentioned above, the sensor body 22 and rotator sleeve 23 are preferably coupled by a certain friction, so that they are normally rotated together. Such handle rotation will result in identical signals from the first sensor 40 and the second sensor 46. It is noted that the combination of the sensor signals may be provided by the circuitry 50. Alternatively, the first and second sensor signals are provided unaltered to the processing unit 3, and the combination is provided there.

An actual camera instrument also has the functionality to rotate the image sensor with respect to the instrument, in order to rotate the view rendered on the display 4 essentially without changing the field of view. In the camera interface 1 simulation of such image sensor adjustment may be provided by detecting relative rotation of the sensor body 22 in relation to the sleeve 23. Such rotation is detected directly by the first sensor 40.

With reference to figure 2, reference 53 indicates an example embodiment of the touch sensitive user interfaces. The illustrated user interface 53 has four buttons 54 which are used to control features in the simulation system such as locking the user interface 1, so that the surgical simulation system 2 no longer registers input from the user interface 1 allowing the user to release the interface and to concentrate on other instruments. The other buttons on the user interface 53 may for example control features such as simulated zoom and focus for the image shown on the display 4. The user interface 53 is in electric contact with the circuitry 50 on the printed circuit board 51, from which the input signal can be outputted via a signal interface 52.

Interaction with the user interface 53 will thus generate an interaction signal available at the signal interface 52. The configuration, number or functions of the buttons are by no means limited to this embodiment, further possibilities include a single button or for example a touch sensitive display, which may dynamically display any number of areas representative of functions or menus on the surgical simulation system 2.

With reference to figure 4 the circuitry 50 on the printed circuit board 51 may be capable of converting analog signals from the first sensor 40 and the second sensor 46 to digital signals. For example the circuitry 50 may be adapted to convert the analog signals to provide signals that are representative of the rotation of rotator sleeve 23 relative the shaft 21 and the rotation of sensor body 22 relative the shaft respectively. The circuitry 50 may also convert digital signals from the user interface 53. In one example embodiment the circuitry 50 is adapted to convert the signals to a digital data signal compliant with USB standards. The interface 52 is here connected to the processing unit 3 via a signal line 55 (see figure 1). The connection may alternatively be wireless, e.g. Bluetooth or WiFi.

The person skilled in the art realizes that the present invention by no means is limited to the preferred embodiments described above. On the contrary, many modifications and variations are possible within the scope of the appended claims. For example, other types of sensors and encoders may be used, for detection of rotation as well as translation. For example, hall effect sensors or piezoelectric sensors.

## Claims

1. A user interface (1) for a camera simulating device in a surgical simulation system (2), comprising:
a rigid shaft (21) having a primary extension along a longitudinal axis (C), said rigid shaft being pivotably supported by a frame (11), and movable in relation to said frame in said axial direction, said rigid shaft being fixed in relation to said frame with respect to rotation around said longitudinal axis,
a handle (20) rigidly attached to said rigid shaft (21), having a rotator sleeve (23) rotatable around said longitudinal axis relative said rigid shaft (21), and a sensor body (22) rotatable around said longitudinal axis (C) relative said rigid shaft (21) and said rotator sleeve (23), and said sensor body (22) including:
a first rotation sensor (40) adapted to detect rotation of said rotator sleeve (23) in relation to said sensor body (22),
a second rotation sensor (46) adapted to detect rotation of said sensor body (23) in relation to said rigid shaft (21), and
a signal interface (52) connected to receive a first detection signal from said first rotation sensor (40) and to receive a second detection signal from said second rotation sensor (46).

2. The user interface of claim 1, further comprising:
processing circuitry (50) adapted to combine said first sensor signal and said second signal to provide a signal representative of relative rotation between the sleeve (23) and the rigid shaft (21).

3. The user interface of claim 1 or 2, wherein said handle (20) further comprises:
a touch sensitive user interface (53) mounted on said sensor body (22),
said signal interface (45) being connected to receive an input signal from said first user interface (48).

4. The user interface of any of the preceding claims, further comprising:
processing circuitry (50) being adapted to convert at least one of said first detection signal and said second detection signal a digital data signal, and provide said digital data signal to said signal interface (52).

5. The user interface of claim 4, wherein said signal interface (52) is a USB interface.

6. The user interface of claim 4, wherein said signal interface (52) is a wireless data interface.

7. The user interface according to any of the preceding claims,
wherein
said first rotation sensor (40) includes an encoder (42), mounted in said sensor body (22), and a first encoding member (41), being rotationally fixed to said rotator sleeve (23), whereby relative rotation of said rotator sleeve (23) with respect to said sensor body (22) will generate a sensor signal indicative of the rotation; and wherein
said second rotation sensor (46) includes a second encoder (48), mounted in said sensor body (22), a second encoding member (47), and a torque transfer member (49) rotationally fixed to said second encoding member (47) and to said rigid shaft (21), whereby relative rotation of said sensor body (22) with respect to said rigid shaft (21) will generate a sensor signal indicative of the rotation.

8. The user interface according to claim 7, wherein said first rotation sensor (40) and said second rotation sensor (46) are arranged coaxially along said longitudinal axis, with said first sensor (46) arranged closer to said rotator sleeve (22), so that said torque transfer member (49) extends along said longitudinal axis (C) through said first rotation sensor (40).

9. A surgical simulation system, comprising:
a processing unit (3) for executing simulation software for simulating a surgical procedure,
a display (4) for displaying a visualization of the simulated procedure,
a user interface device (1) according to any one of the preceding claims, connected to said processing unit for allowing a user to interact with the computer simulation visualized in the display.
